# EUROPEAN PATENT SPECIFICATION

(11) **EP 3 927 446 B1**
(45) Date of publication and mention of the grant of the patent: **05.06.2024**
(21) Application number: 20706245.6
(22) Date of filing: 20.02.2020
(51) Int. Cl.: C02F 11/127, C02F 103/34, E02F 7/06, B01D 21/01, C02F 11/148, E21B 41/00, C02F 11/14

(54) **PORTABLE WASTE TREATMENT APPARATUS**
TRAGBARES ABFALLBEHANDLUNGSGERÄT
APPAREIL DE TRAITEMENT DE DÉCHETS TRANSPORTABLE

(30) Priority: 22.02.2019 GB 201902422
(43) Date of publication of application: 29.12.2021
(73) Proprietor: CDE Global Limited, Cookstown, Co Tyrone BT80 9HJ (GB)
(72) Inventor: HUMPHREY, Alexander, Tyrone BT80 9HJ (GB); MCCOOE, Jordan, Tyrone BT80 9HJ (GB)
(74) Representative: FRKelly
(86) International application number: PCT/EP2020/054462
(87) International publication number: WO 2020/169722

(56) References cited:
- EP-A1- 2 907 559
- WO-A1-2018/177933
- CA-A1- 2 959 394
- FR-A1- 2 564 453
- KR-A- 20060 005 795
- US-A1- 2012 312 755

## Description

### FIELD OF THE INVENTION

This invention relates to a waste treatment apparatus and in particular to a portable waste treatment apparatus that can be used to treat waste from a hydro-excavation or NDD process onsite.

### BACKGROUND OF THE INVENTION

To minimise the impact on the environment, hydro-excavation (otherwise known as non-destructive digging or simply NDD) is becoming an increasingly popular alternative to traditional mechanical excavation in numerous construction projects worldwide. Hydro-excavation is a process for performing ground works wherein high-pressure water jets are used to cut and dig earth and a vacuum apparatus is used to suck up the resulting slurry into a storage tank mounted on a vehicle (often referred to as a "hydrovac tanker") for subsequent disposal. Hydro-excavation is a safer and more precise way of excavating, exposing electrical cables and underground pipes without risk of damaging them, hence the use of the alternative term, non-destructive digging.

Hydro-excavation, although an effective and safe alternative to conventional mechanical digging or excavation, is not without its drawbacks. Like any digging or drilling process, hydro-excavation produces waste and the logistics of transporting and treating/disposing of this waste is both expensive and time consuming. The waste material (slurry) collected during such hydro-evacuation processes typically comprises 50% free water and 50% solids.

Disposal of the hydro-excavation waste is typically via landfill. However, this is becoming increasingly costly. In addition to high disposal and transport costs, the consistency of hydro-excavation waste brings with it another problem. Hydro-excavation waste is very wet, making its disposal and management difficult. Many landfill sites will not take the waste in this form and facilities that do accept such waste slurry often have limited capacities to process the waste in its slurry form.

Often a popular solution to deal with hydro-excavated slurry is to simply let it dry in a stockpile. However, this method is neither efficient nor sustainable, particularly in the winter months when the drying process is extended. Treatment of hydro-excavation waste by dewatering onsite may allow contractors to recover spadable outputs of washed sand, aggregates and recycled water. The spadable outputs can be kept and reused onsite, allowing businesses reduce the cost of buying new materials and eliminating the need to transport new materials to site. Waste treatment significantly reduces expenditure on landfill and transport but an onsite waste treatment apparatus will go one step further, eliminating these costs completely.

Furthermore, waste water streams containing entrained solid impurities and contaminants in suspension are produced from numerous other quarrying, mining, chemical or industrial processes and it is often desirable to treat and reuse such water onsite, particularly in regions prone to water shortages.

However, most known slurry treatment and dewatering systems are large and difficult to transport and require considerable assembly and commissioning time before they can be used onsite. Examples of mobile plant installation for treatment of industrial sludge are shown in EP 2 907 559, US 2012/312755, FR 2 564 453.

### SUMMARY OF THE INVENTION

According to the present invention there is provided a portable waste treatment apparatus for treating hydro-excavation waste comprising an elongate frame formed from separable upper and lower frame sections mounted upon one another, the upper frame section housing a mixing tank for receiving waste slurry and mixing the waste slurry with flocculating and/or coagulating agents, a thickener tank receiving waste slurry from the mixing tank, and a dewatering device for dewatering sludge collected in the thickener tank, the lower frame section housing a buffer tank arranged to receive sludge from a sludge outlet of the thickener tank, a pump for pumping said sludge to said dewatering device and a water tank arranged to receive water overflowing from the thickener tank.

The buffer tank and water tank are arranged to receive sludge and water respectively from the thickener tank under gravity, preferably without requiring direct coupling therebetween.

In a preferred embodiment each of said upper and lower frame sections comprise a right-angled parallelepiped having the dimensions of a standard shipping container to facilitate transportation of each frame section by road or sea freight. Preferably the components mounted on the upper and lower frame sections are adapted to be retained within the footprint of the two frame sections when in a transport configuration.

Each of the upper and lower frame sections may include lifting points to enable each frame section to be readily lifted onto and off a trailer bed for transportation.

The thickener tank may have a circular outer wall and a coaxially arranged inner wall extending around at least an upper portion of the tank to define an annular water collection chamber therebetween into which water overflowing over an upper lip of the inner wall can pass. A conical bottom wall of the thickener tank preferably incorporates said sludge outlet at its lowest point. The thickener tank preferably comprises a central section located within the confines of the upper frame section and first and second side sections separable from the central section on either side of the upper frame section. The central section and side sections defining the thickener tank may be joined along cooperating joining flanges extending substantially parallel to one another and to a longitudinal axis of the upper frame section. Elastomeric sealing gaskets may be provided between said cooperating joining flanges and quickly detachable clamp members may be provided adapted to clamp the joining flanges together to form a water tight seal between the cooperating central section and side sections of the thickener tank.

The buffer tank and water tank may comprise adjacent sections of a single tank mounted within the lower frame section and being divided by one or more dividing walls.

In a preferred embodiment the dewatering device comprises a centrifugal separator. A conveying device may be provided extending outwardly from the upper frame section for conveying dewatered sludge from the centrifugal separator to a stockpile or collection hopper or further conveyor. The conveying device may comprise a screw conveyor. Preferably the conveying device is adapted to be removable or foldable to a position within the upper frame section for transportation. A centrate collection sump may be provided for receiving separated water (centrate) from the centrifugal separator. In one embodiment water collected in the collection sump may be passed into the water tank in the lower frame section. Alternatively water collected in the centrate collection sump may be pumped to the mixing tank to be further clarified.

Storage and dosing equipment for the flocculating and/or coagulating agents may be housed in the lower frame section, the storage and dosing equipment being adapted to supply metered amounts of coagulating and flocculating agents at selected concentrations into the mixing tank in the upper frame section.

Control panels and electronic control systems may be housed in the upper frame.

According to a further aspect of the present invention there is provided a method of treating hydro-excavation waste comprising the steps of feeding hydro-excavation waste into a mixing tank and mixing said waste with metered amounts of flocculating and/or coagulating agents at selected concentrations, passing the waste from the mixing tank into a thickener tank wherein suspended solids agglomerate and fall out of suspension to settle in a lower region of the thickener tank while clarified water overflows from an upper region of the thickener tank, passing said overflowing clarified water under gravity into a water collection tank located beneath the thickener tank, passing sludge collected in the bottom of the thickener tank under gravity into a buffer tank located beneath the thickener tank, pumping sludge collected in the buffer tank to a dewatering device, wherein the sludge is dewatered, collecting separated water in a sump while conveying dewatered sludge to a stockpile or collection hopper via a conveyor device.

In a preferred embodiment the dewatering device comprises a centrifugal separator. The conveyor device may comprise a screw conveyor.

### BRIEF DESCRIPTION OF THE DRAWINGS

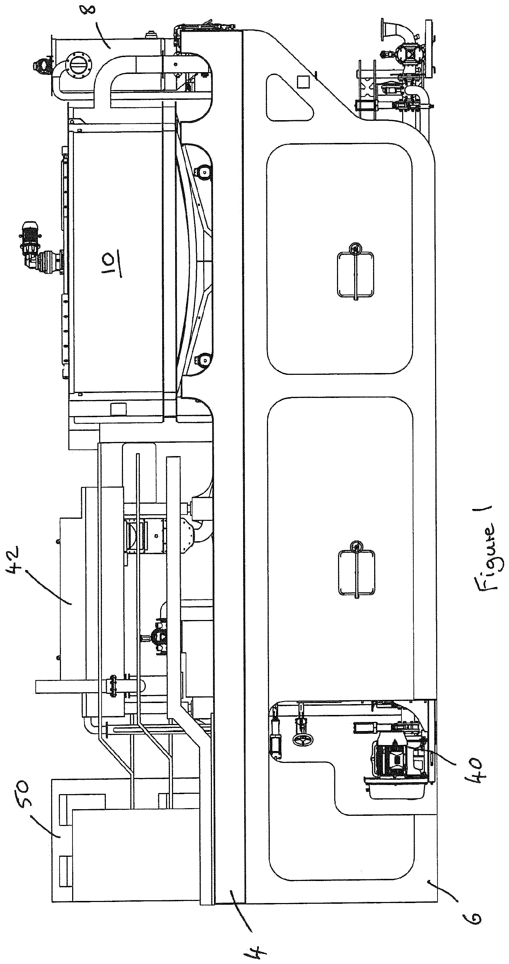

A waste treatment apparatus in accordance with an embodiment of the present invention will now be described, by way of example only, with reference to the accompany drawings, in which :-
Figure 1 is a side view of portable waste treatment apparatus in accordance with an embodiment of the present invention;

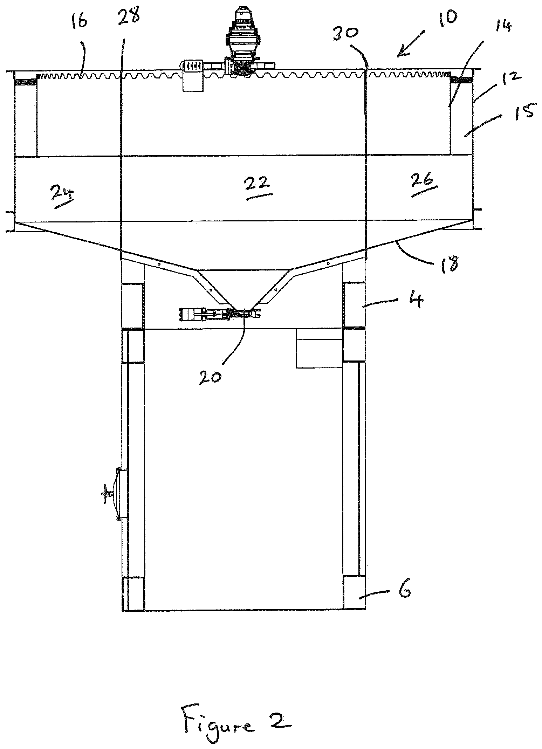

Figure 2 is an end view of the apparatus of Figure 1;
Figure 3 is a perspective exploded view of the apparatus of Figure 1;

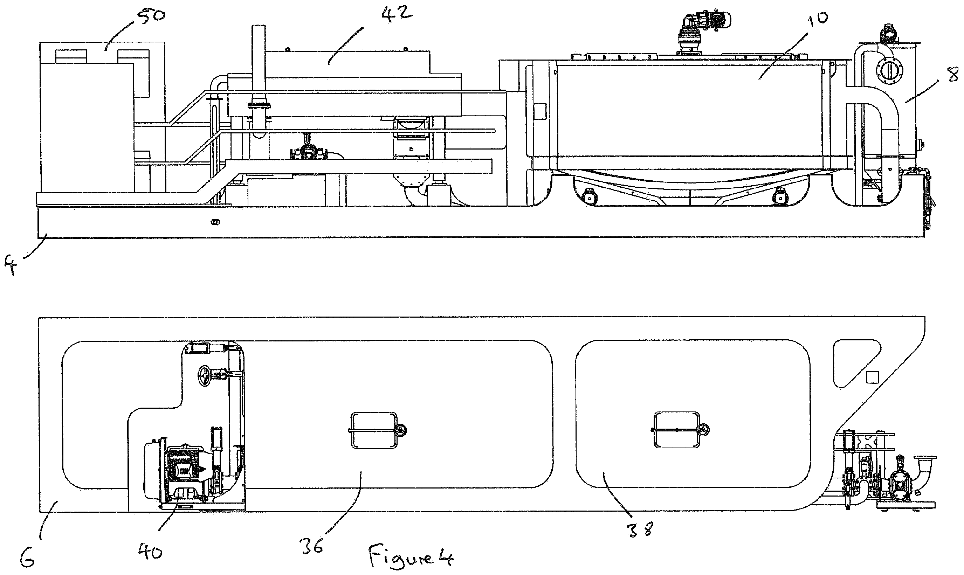

Figure 4 is a side view of the apparatus of Figure 1 in a transport configuration;

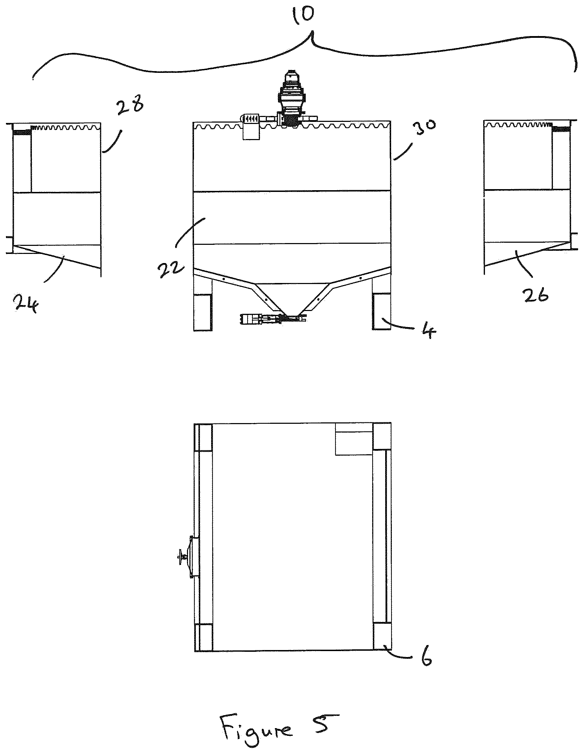

Figure 5 is an end view of the apparatus of Figure 1 in its transport configuration;

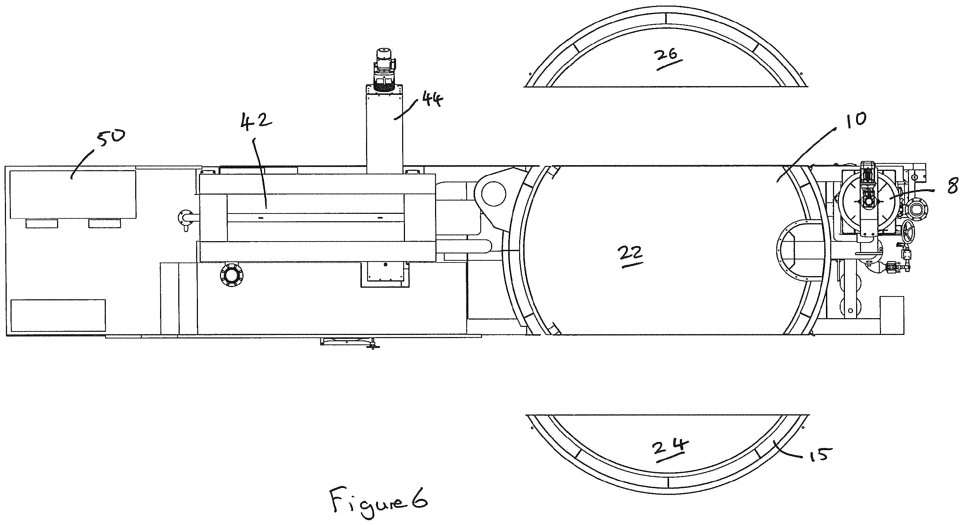

Figure 6 is an exploded plan view of the apparatus of Figure 1; and
Figure 7 is a schematic view of the waste treatment process of the apparatus of Figure 1.

### DETAILED DESCRIPTION OF THE DRAWINGS

In addition to hydro-excavation processes, waste water slurries containing entrained solid impurities and contaminants in suspension are produced from numerous quarrying, mining, chemical or industrial processes. It is often desirable to dewater such slurries onsite to facilitate disposal or recycling of the solids and, in particular, recycling of the water content of the waste, particularly in regions prone to water shortages.

Before the waste water can be reused, the solid impurities and contaminants (referred to as "fines") must be removed from the water. This is typically done by passing the water into a thickener tank wherein the fines are able to settle out under the action of gravity. Flocculating and/or coagulating agents are typically added to the waste slurry to facilitate separation of the fines (suspended solids) and water. Coagulants neutralise the negative electrical charge on particles, destabilising the forces keeping colloids apart. Water treatment coagulants comprise positively charged molecules that, when added to water, accomplish this charge neutralisation. Inorganic coagulants, organic coagulants or a combination of both may be used for this purpose. Examples of suitable coagulants are aluminium salts, iron salts and polyelectrolytes. Flocculants gather the destabilised particles together and cause them to bind together and drop out of solution.

The collected solids are removed from a lower region of the thickener tank for subsequent dewatering and disposal while the cleaned or clarified water is removed from an upper region of the settling tank to be re-used, typically after passing over a weir in the upper region of the tank.

A portable waste treatment apparatus for treating hydro-excavation waste in accordance with an embodiment of the present invention, as is illustrated in the drawings, comprising an elongate frame formed from separable upper and lower frame sections 4,6 stacked upon one another. Preferably each of said upper and lower frame sections 4,6 comprise a right-angled parallelepiped having the dimensions of a standard shipping container to facilitate transportation of each frame section by road or sea freight. The components mounted on the upper and lower frame sections are adapted to be retained within the footprint of the two frame sections when in a transport configuration, as will be described below in more detail. Each of the upper and lower frame sections 4,6 includes lifting points to enable each frame section to be readily lifted onto and off a trailer bed for each relocation. Preferably each frame section 4,6 is dimensioned to be easily transportable by ISO approved open top, high cube containers.

The upper frame section 4 houses a mixing tank 8 for receiving waste slurry and mixing the waste slurry with flocculating and coagulating agents before passing the waste slurry into a thickener tank 10 mounted in the upper frame section 4 adjacent the mixing tank 8. The mixing tank may include a stirring means, such as a stirring paddle.

The thickener tank 10 has a circular outer wall 12 and a coaxially arranged inner wall 14 extending around at least an upper portion of the tank 10 to define an annular water collection chamber 15 between said inner and outer walls 12,14 into which water overflowing over an upper lip 16 of the inner wall 14 can pass. A conical bottom wall 18 of the thickener tank 10 incorporates a central sludge outlet 20 at its lowest point.

The thickener tank 10 has a diameter greater than the width of the upper frame section 4. Therefore, to permit the apparatus to be readily transported between sites by standard road transport means, such as articulated lorries, the thickener tank 10 is separable into three sections, namely a central section 22 located within the confines of the upper frame section 4 and first and second side sections 24,26 being separable from the central section on either side of the upper frame section 4.

The central section 22 and side sections 24,26 defining the thickener tank 10 are joined along cooperating joining flanges 28,30 extending parallel to one another and to a longitudinal axis of the upper frame section 4. Elastomeric sealing gaskets are preferably provided between cooperating joining flanges 28,30 and quickly detachable clamp members may be provided for clamping the joining flanges 28,30 together to form a water tight seal between the cooperating central section 22 and side sections 24,26 of the thickener tank 10.

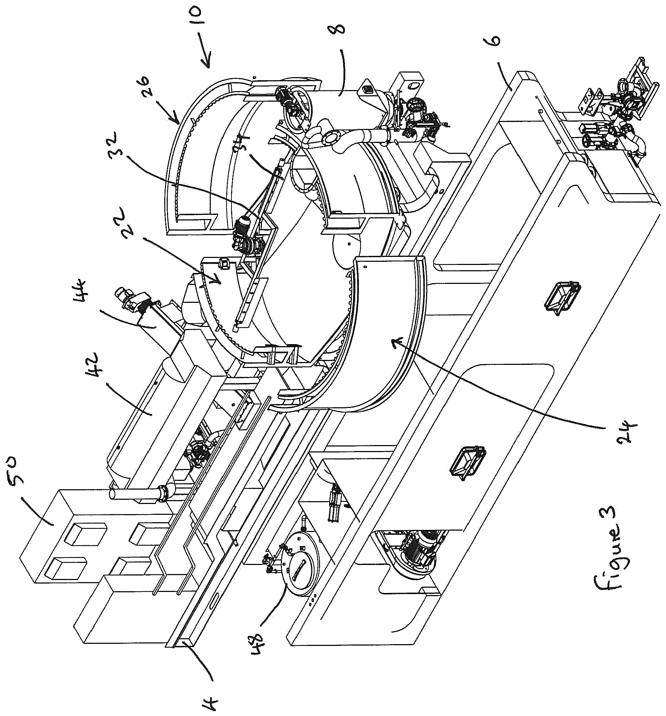

As best shown in Figure 3, a scraper mechanism 32 may be mounted within the thickener tank 10 having radially extending arms upon which are mounted scraper blades 34 whereby scum or floating contaminants on the water collected in the water collection chamber 15 may be removed. The removed scum may be passed into the buffer tank 36 along with the sludge from the thickener tank 10. A rake mechanism (not shown) may also be provided for moving sludge towards the sludge outlet 20. The rake mechanism and/or scraper mechanism is preferably mounted on a bridge extending across the central section 22 of the thickener tank 10. A motor and gearbox assembly for the rake mechanism and/or scraper mechanism may be mounted on the bridge and may be detachable therefrom for transportation.

The lower frame section 6 houses a buffer tank 36 arranged to receive sludge from the sludge outlet 20 in the bottom wall 18 of the thickener tank 10. Alongside the buffer tank 36 is provided a water tank 38 arranged to receive water, from which fines have been removed, overflowing from the peripheral water collection chamber 15 of the thickener tank 10. The buffer tank 36 and water tank 38 are preferably arranged to receive sludge and water respectively from the thickener tank 10 under gravity, obviating the need for pumps and avoiding the need for a direct coupling between the thickener tank 10 and the buffer and water tanks 36,38.

The buffer tank 36 and water tank 38 may comprise adjacent sections of a single tank mounted within the lower frame section 6, said single tank being divided by suitable dividing walls to define said buffer and water tanks 36,38.

Sludge collected in the buffer tank 36 is pumped, via a sludge pump 40 mounted in the lower frame section 6 alongside the buffer tank 36, to a dewatering device, preferably in the form of a centrifugal separator 42 mounted in the upper frame section 4, alongside the thickener tank 10, for dewatering the sludge. Dewatered sludge from the centrifugal separator 42 is conveyed to a stockpile or collection means alongside the upper frame section 4 via a suitable conveyor, preferably a screw conveyor 44 in the preferred embodiment, which may extend outwardly from the upper frame section 4 and which may be adapted to be removable or foldable to a position within the upper frame section 4 for transportation. The separated water (centrate) from the centrifugal separator 42 may be collected in a collection sump 46 mounted below the centrifugal separator 42. The water collected in the centrate collection sump may be passed into the water tank 38 in the lower frame section. Alternatively, the separated water may be pumped from the collection sump 46 into the mixing tank 8 to be further clarified by taking a second pass through the thickener tank 10. Other dewatering devices are envisaged.

Storage and dosing equipment 48 for the flocculating and/or coagulating agents may be housed in the lower frame section 6, alongside the buffer and water storage tanks 36,38, the storage and dosing equipment 48 being adapted to supply metered amounts of coagulating and flocculating agents at selected concentrations into the mixing tank 8 in the upper frame section 4.

Control panels and electronic control systems 50 for the apparatus may be housed in the upper frame section 4 above the storage and dosing equipment 48 for the flocculating and/or coagulating agents when the upper and lower frame sections 4,6 are coupled together.

The pumps and associated valves mounted on the lower frame section 6 may be pre-assembled, plumbed and tested in the factory to minimise installation time of the apparatus. Furthermore, electrical components mounted on both the upper and lower frame sections 4,6 of the apparatus may be pre-wired and tested prior to dispatch from the factory, ensuring minimal intervention required by installation and commissioning engineers.

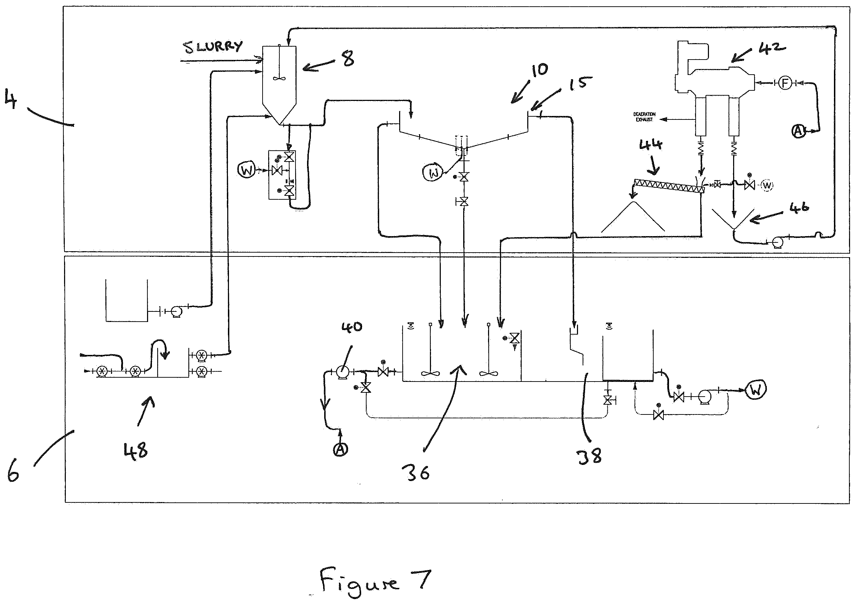

Operation of the apparatus will now be described with reference to Figure 7 of the drawings. Slurry to be treated is fed into the mixing tank 8 and mixed with metered amounts of flocculating and coagulating agents at selected concentrations supplied from the storage and dosing equipment 48 via integral pumps. The mixture of slurry and flocculating and coagulating agents is passed into the thickener tank, wherein the solids agglomerate and fall out of suspension while water overflows from the upper lip 16 of the inner wall 14 of the thickener tank 10 into the water collection chamber 15. The water collected in the water collection chamber 15 flows under gravity into the water tank 38 in the lower frame section 6 while sludge collected in the bottom of the thickener tank 10 flows into the buffer tank 36, again under the action of gravity. Scum or floating contaminants on the water collected in the water collection chamber 15 may be arranged to pass into the buffer tank 36 along with the sludge from the thickener tank 10.

Sludge collected in the buffer tank 36 is pumped to the centrifugal separator 42 in the upper frame section 4, wherein the sludge is dewatered by centrifugal action, separated water being collected in a centrate collection sump 40 before being passed into the water tank 38 or pumped back into the mixing tank 8 while dewatered sludge is conveyed to a stockpile or collection hoppers via the screw conveyor 44.

The upper and lower frame sections 4,6 can be separated and reconnected without the need for qualified electricians by the use of suitable electrical quick couplings, which may be adapted to be brought into engagement with one another as the upper frame section 4 is located on top of the lower frame section 6.

The apparatus may be powered by a mains electricity supply and/or a portable generator. A generator may be incorporated into one of the frame sections.

While the apparatus and method in accordance with the present invention have been described in relation to the treatment of hydro-excavation waste, it is envisaged that the apparatus and method may be used for the treatment of other high water content slurries from numerous other sources.

## Claims

1. A portable waste treatment apparatus for treating hydro-excavation waste comprising an elongate frame formed from separable upper and lower frame sections (4,6) mounted upon one another, the upper frame section (4) housing a mixing tank (8) for receiving waste slurry and mixing the waste slurry with flocculating and/or coagulating agents, a thickener tank (10) receiving waste slurry from the mixing tank (8), and a dewatering device (42) for dewatering sludge collected in the thickener tank (8), the lower frame section (6) housing a buffer tank (36) arranged to receive sludge from a sludge outlet (20) of the thickener tank (10), a pump (40) for pumping said sludge to said dewatering device (42) and a water tank (38) arranged to receive water overflowing from the thickener tank (10), wherein the buffer tank (36) and water tank (38) are arranged to receive sludge and water respectively from the thickener tank (10) under gravity.

2. An apparatus as claimed in claim 1, wherein each of said upper and lower frame sections (4,6) comprise a right-angled parallelepiped having the dimensions of a standard shipping container to facilitate transportation of each frame section by road or sea freight.

3. An apparatus as claimed in claim 2, wherein the components mounted on the upper and lower frame sections (4,6) are adapted to be retained within the footprint of the two frame sections when in a transport configuration.

4. An apparatus as claimed in any preceding claim, wherein the thickener tank (10) has a circular outer wall (12) and a coaxially arranged inner wall (14) extending around at least an upper portion of the tank (10) to define an annular water collection chamber (15) therebetween into which water overflowing over an upper lip (16) of the inner wall (14) can pass.

5. An apparatus as claimed in any preceding claim, wherein said buffer tank (36) and water tank (38) comprise adjacent sections of a single tank mounted within the lower frame section (6) and being divided by one or more dividing walls.

6. An apparatus as claimed in any preceding claim, wherein said dewatering device (42) comprises a centrifugal separator.

7. An apparatus as claimed in claim 6, further comprising a conveying device (44) extending outwardly from the upper frame section (4) for conveying dewatered sludge from the centrifugal separator (42) to a stockpile or collection hopper or further conveyor.

8. An apparatus as claimed in claim 7, wherein said conveying device comprises a screw conveyor (44).

9. An apparatus as claimed in claim 7 or claim 8, wherein the conveying device (44) is adapted to be removable or foldable to a position within the upper frame section for transportation.

10. An apparatus as claimed in any of claims 6 to 9, wherein a centrate collection sump (46) is provided for receiving separated water (centrate) from the centrifugal separator (42).

11. An apparatus as claimed in claim 10, wherein water collected in the centrate collection sump (46) is passed into the water tank (38) in the lower frame section (6).

12. An apparatus as claimed in claim 10, wherein water collected in the centrate collection sump (46) is pumped to the mixing tank (8) to be further clarified.

13. An apparatus as claimed in any preceding claim, wherein storage and dosing equipment (48) for the flocculating and/or coagulating agents is housed in the lower frame section (6), alongside the buffer and water storage tanks (36,38), the storage and dosing equipment (48) being adapted to supply metered amounts of coagulating and flocculating agents at selected concentrations into the mixing tank (10) in the upper frame section (4).

14. An apparatus as claimed in any preceding claim, wherein control panels and electronic control systems (50) are housed in the upper frame section (4).

15. An apparatus as claimed in any preceding claim, wherein the thickener tank (10) comprises a central section (22) located within the confines of the upper frame section (4) and first and second side sections (24,26) separable from the central section (22) on either side of the upper frame section (4), the central section (22) and side sections (24,26) defining the thickener tank (10) being joined along cooperating joining flanges (28,30) extending substantially parallel to one another and to a longitudinal axis of the upper frame section (4).

## Patentansprüche

1. Transportfähige Abfallbehandlungsvorrichtung zum Behandeln von Hydroaushubabfall, umfassend einen langgestreckten Rahmen, der aus einem oberen und einem unteren Rahmenabschnitt (4, 6), die trennbar sind und aufeinander montiert sind, gebildet ist, wobei in dem oberen Rahmenabschnitt (4) Folgendes untergebracht ist: ein Mischbehälter (8) zum Aufnehmen von Abfallflüssigschlamm und Mischen des Abfallflüssigschlamms mit Flockungs- und/oder Gerinnungsmitteln, ein Eindickerbehälter (10), der Abfallflüssigschlamm aus dem Mischbehälter (8) aufnimmt, und eine Entwässerungsvorrichtung (42) zum Entwässern von in dem Eindickerbehälter (8) gesammeltem Schlamm, wobei in dem unteren Rahmenabschnitt (6) Folgendes untergebracht ist: ein Pufferbehälter (36), der dazu angeordnet ist, Schlamm von einem Schlammauslass (20) der Eindickerbehälters (10) aufzunehmen, eine Pumpe (40) zum Pumpen des Schlamms zu der Entwässerungsvorrichtung (42) und ein Wasserbehälter (38), der dazu angeordnet ist, aus dem Eindickerbehälter (10) überlaufendes Wasser aufzunehmen, wobei der Pufferbehälter (36) und der Wasserbehälter (38) dazu angeordnet sind, Schlamm bzw. Wasser aus dem Eindickerbehälter (10) unter Schwerkraft aufzunehmen.

2. Vorrichtung nach Anspruch 1, wobei der obere und der untere Rahmenabschnitt (4, 6) jeweils ein rechtwinkliges Parallelepiped mit den Abmessungen eines Norm-Versandcontainers umfassen, um den Transport jedes Rahmenabschnitts per Straßen- oder Seefracht zu erleichtern.

3. Vorrichtung nach Anspruch 2, wobei die auf dem oberen und dem unteren Rahmenabschnitt (4, 6) montierten Komponenten dazu angepasst sind, innerhalb des Grundrisses der zwei Rahmenabschnitte gehalten zu werden, wenn sie sich in einer Transportkonfiguration befinden.

4. Vorrichtung nach einem der vorangehenden Ansprüche, wobei der Eindickerbehälter (10) eine kreisförmige äußere Wand (12) und eine koaxial angeordnete innere Wand (14), die sich um mindestens einen oberen Teil des Behälters (10) erstreckt, aufweist, um eine ringspaltförmige Wassersammelkammer (15) dazwischen zu definieren, in die über einen oberen Rand (16) der inneren Wand (14) überlaufendes Wasser fließen kann.

5. Vorrichtung nach einem der vorangehenden Ansprüche, wobei der Pufferbehälter (36) und der Wasserbehälter (38) benachbarte Abschnitte eines einzigen Behälters umfassen, die in dem unteren Rahmenabschnitt (6) montiert sind und durch eine oder mehrere Trennwände getrennt sind.

6. Vorrichtung nach einem der vorangehenden Ansprüche, wobei die Entwässerungsvorrichtung (42) einen Zentrifugalabscheider umfasst.

7. Vorrichtung nach Anspruch 6, ferner umfassend eine Fördervorrichtung (44), die sich von dem oberen Rahmenabschnitt (4) nach außen erstreckt, zum Fördern von entwässertem Schlamm aus dem Zentrifugalabscheider (42) zu einer Halde oder einem Sammeltrichter oder einem weiteren Förderer.

8. Vorrichtung nach Anspruch 7, wobei die Fördervorrichtung einen Schneckenförderer (44) umfasst.

9. Vorrichtung nach Anspruch 7 oder Anspruch 8, wobei die Fördervorrichtung (44) dazu angepasst ist, zum Transport abnehmbar oder in eine Stellung in dem oberen Rahmenabschnitt klappbar zu sein.

10. Vorrichtung nach einem der Ansprüche 6 bis 9, wobei ein Zentratsammelsumpf (46) zum Aufnehmen von abgeschiedenem Wasser (Zentrat) aus dem Zentrifugalabscheider (42) bereitgestellt ist.

11. Vorrichtung nach Anspruch 10, wobei in dem Zentratsammelsumpf (46) gesammeltes Wasser in den Wasserbehälter (38) in dem unteren Rahmenabschnitt (6) geleitet wird.

12. Vorrichtung nach Anspruch 10, wobei in dem Zentratsammelsumpf (46) gesammeltes Wasser in den Mischbehälter (8) gepumpt wird, um weiter geklärt zu werden.

13. Vorrichtung nach einem der vorangehenden Ansprüche, wobei Aufbewahrungs- und Dosierausrüstung (48) für die Flockungs- und/oder Gerinnungsmittel in dem untern Rahmenabschnitt (6) neben dem Puffer- und dem Wasseraufbewahrungsbehälter (36, 38) untergebracht ist, wobei die Aufbewahrungs- und Dosierausrüstung (48) dazu angepasst ist, abgemessene Mengen an Gerinnungs- und Flockungsmitteln in ausgewählten Konzentrationen in den Mischbehälter (10) in dem oberen Rahmenabschnitt (4) zuzuführen.

14. Vorrichtung nach einem der vorangehenden Ansprüche, wobei Steuerpulte und elektronische Steuersysteme (50) in dem oberen Rahmenabschnitt (4) untergebracht sind.

15. Vorrichtung nach einem der vorangehenden Ansprüche, wobei der Eindickerbehälter (10) einen mittleren Abschnitt (22), der sich innerhalb der Grenzen des oberen Rahmenabschnitts (4) befindet, und einen ersten und einen zweiten Seitenabschnitt (24, 26), die von dem mittleren Abschnitt (22) abtrennbar sind, auf jeweils einer Seite des oberen Rahmenabschnitts (4) umfasst, wobei der mittlere Abschnitt (22) und die Seitenabschnitte (24, 26), die den Eindickerbehälter (10) definieren, entlang zusammenwirkender Verbindungsflansche (28, 30) verbunden sind, die sich im Wesentlichen parallel zueinander und zu einer Längsachse des oberen Rahmenabschnitts (4) erstrecken.

## Revendications

1. Appareil portable de traitement de déchets destiné à traiter des déchets d'hydro-excavation comportant un châssis allongé formé à partir de sections de châssis supérieure et inférieure séparables (4, 6) montées l'une sur l'autre, la section de châssis supérieure (4) logeant un réservoir de mélange (8) destiné à recevoir de la boue de déchets et à mélanger la boue de déchets avec des agents de floculation et/ou de coagulation, un réservoir épaississeur (10) recevant la boue de déchets en provenance du réservoir de mélange (8), et un dispositif d'égouttage (42) servant à égoutter les boues collectées dans le réservoir épaississeur (8), la section de châssis inférieure (6) logeant un réservoir tampon (36) agencé pour recevoir la boue en provenance d'une sortie de boue (20) du réservoir épaississeur (10), une pompe (40) servant à pomper lesdites boues jusqu'audit dispositif d'égouttage (42) et un réservoir d'eau (38) agencé pour recevoir l'eau débordant du réservoir épaississeur (10), dans lequel le réservoir tampon (36) et le réservoir d'eau (38) sont agencés pour recevoir la boue et l'eau respectivement en provenance du réservoir épaississeur (10) sous l'effet de la gravité.

2. Appareil selon la revendication 1, dans lequel chacune desdites sections de châssis supérieure et inférieure (4, 6) comporte un parallélépipède rectangle ayant les dimensions d'un conteneur d'expédition standard pour faciliter le transport de chaque section de châssis par route ou par fret maritime.

3. Appareil selon la revendication 2, dans lequel les éléments constitutifs montés sur les sections de châssis supérieure et inférieure (4, 6) sont adaptés pour être retenus dans les limites de la surface d'encombrement des deux sections de châssis quand elles sont dans une configuration de transport.

4. Appareil selon l'une quelconque des revendications précédentes, dans lequel le réservoir épaississeur (10) a une paroi extérieure circulaire (12) et une paroi intérieure agencée de manière coaxiale (14) s'étendant autour d'au moins une partie supérieure du réservoir (10) pour définir, entre elles, une chambre de collecte d'eau annulaire (15) dans laquelle peut passer l'eau qui déborde par-dessus une lèvre supérieure (16) de la paroi intérieure (14).

5. Appareil selon l'une quelconque des revendications précédentes, dans lequel ledit réservoir tampon (36) et ledit réservoir d'eau (38) comportent des sections adjacentes d'un seul réservoir monté à l'intérieur de la section de châssis inférieure (6) et divisé par une ou plusieurs parois de séparation.

6. Appareil selon l'une quelconque des revendications précédentes, dans lequel ledit dispositif d'égouttage (42) comporte un séparateur centrifuge.

7. Appareil selon la revendication 6, comportant par ailleurs un dispositif de transport (44) s'étendant vers l'extérieur depuis la section de châssis supérieure (4) à des fins de transport de la boue égouttée pour passer du séparateur centrifuge (42) à une trémie de stockage ou de collecte ou un autre transporteur.

8. Appareil selon la revendication 7, dans lequel ledit dispositif de transport comporte un transporteur à vis sans fin (44).

9. Appareil selon la revendication 7 ou la revendication 8, dans lequel le dispositif de transport (44) est adapté pour être amovible ou pliable au niveau d'une position à l'intérieur de la section de châssis supérieure à des fins de transport.

10. Appareil selon l'une quelconque des revendications 6 à 9, dans lequel un bac collecteur de centrifugat (46) est mis en oeuvre pour recevoir l'eau séparée (centrifugat) en provenance du séparateur centrifuge (42).

11. Appareil selon la revendication 10, dans lequel l'eau collectée dans le bac collecteur de centrifugat (46) est passée jusque dans le réservoir d'eau (38) dans la section de châssis inférieure (6).

12. Appareil selon la revendication 10, dans lequel l'eau recueillie dans le bac collecteur de centrifugat (46) est pompée jusqu'au réservoir de mélange (8) à des fins de clarification supplémentaire.

13. Appareil selon l'une quelconque des revendications précédentes, dans lequel un équipement de stockage et de dosage (48) pour les agents de floculation et/ou de coagulation est logé dans la section de châssis inférieure (6), le long des réservoirs tampon et de stockage d'eau (36, 38), l'équipement de stockage et de dosage (48) étant adapté pour fournir des quantités mesurées d'agents de coagulation et de floculation à des concentrations sélectionnées dans le réservoir de mélange (10) dans la section de châssis supérieure (4).

14. Appareil selon l'une quelconque des revendications précédentes, dans lequel des panneaux de commande et des systèmes de commande électroniques (50) sont logés dans la section de châssis supérieure (4).

15. Appareil selon l'une quelconque des revendications précédentes, dans lequel le réservoir épaississeur (10) comporte une section centrale (22) située dans les limites de la section de châssis supérieure (4) et des première et deuxième sections latérales (24, 26) séparables de la section centrale (22) de chaque côté de la section de châssis supérieure (4), la section centrale (22) et les sections latérales (24, 26) définissant le réservoir épaississeur (10) étant reliées le long de brides de liaison coopérantes (28, 30) s'étendant de manière sensiblement parallèle l'une par rapport à l'autre et à un axe longitudinal de la section de châssis supérieure (4).
